# EUROPEAN PATENT SPECIFICATION

(11) **EP 1 761 016 B1**
(45) Date of publication and mention of the grant of the patent: **01.04.2009**
(21) Application number: 06254530.6
(22) Date of filing: 31.08.2006
(51) Int. Cl.: H04M 3/54

(54) **Method for in-progress telephone call transfer between a wireless telephone and a wired telephone**
Verfahren zur Übergabe eines laufenden Telefonanrufs zwischen einem Drahtlosentelefon und einem Festnetztelefon
Procede de transfert d'un appel telephonique en cours, d'un telephone sans fil a un telephone cable

(30) Priority: 01.09.2005 US 218153
(43) Date of publication of application: 07.03.2007
(73) Proprietor: Avaya Inc., Basking Ridge, New Jersey 07920 (US)
(72) Inventor: Abramson, Sandra R., Freehold, New Jersey 07728 (US); Milton, Stephen M., Freehold, New Jersey 07728 (US)
(74) Representative: Williams, David John

(56) References cited:
- WO-A2-98/36550
- US-A1- 2002 019 246
- US-A1- 2005 063 359

## Description

### Field of the Invention

The present invention relates to telecommunications in general, and, more particularly, to continuing a call on a call appearance that has been excluded from the call.

### Background of the Invention

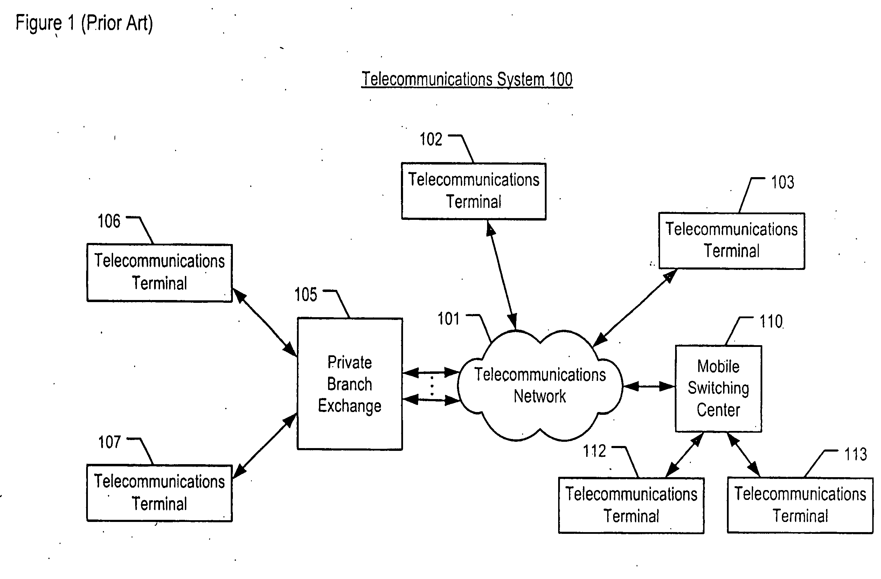

Figure 1 depicts a schematic diagram of a telecommunications system in the prior art. Telecommunications system 100 comprises:
i. telecommunications network 101,
ii. network telecommunications terminals 102 and 103,
iii. private branch exchange 105,
iv. on-premises telecommunications terminals 106 and 107,
v. mobile switching center 110, and
vi. cellular telecommunications terminals 112 and 113,
all of which are interconnected as shown.

Telecommunications network 101 is one of multiple, telecommunications networks that are represented in Figure 1. Telecommunications network 101 comprises the Public Switched Telephone Network, which is a complex of telecommunications equipment that is owned and operated by different entities throughout the World. In the United States of America, for example, the Public Switched Telephone Network (or "PSTN") comprises an address space that is defined by ten digits, and, therefore, comprises 10 billion unique addresses or "telephone numbers." The public switched telephone networks in other countries are similar:

Network 101 interconnects the other telecommunications networks that include (i) the enterprise network supported by private branch exchange 105 and (ii) the cellular network supported by mobile switching center 110. The enterprise network supported by private branch exchange 105 provides telecommunications service to one or more telecommunications terminals-for example, terminals 106 and 107-within the enterprise area served, such as an office building or campus. The cellular network supported by mobile switching center 110 provides telecommunications service to one or more cellular telecommunications terminals, including terminals 112 and 113.

Additionally, network 101 provides telecommunications service to other telecommunications terminals, such as terminals 102 and 103. For example, terminal 102 or 103 might originate a call that routes through network 101 to private branch exchange 105.

Mobile switching center 110 is capable of switching incoming calls from network 101 to cellular-capable terminals that have registered with switching center 110, such as terminals 112 and 113. Switching center 110 is also capable of handling outgoing calls from cellular-capable terminals to network 101. Switching center 110 communicates with terminals 112 and 113 via one or more radio base stations in the cellular network.

Private branch exchange (PBX) 105 is an enterprise system capable of switching incoming calls (*e.g.*, from terminal 102, *etc*.) from telecommunications network 101 via one or more communications paths to one or more on-premises terminals, such as on-premises terminals 106 and 107. Private branch exchange 105 is also capable of handling outgoing calls from on-premises terminals to network 101 via one or more communications paths.

Private branch exchange 105 is also capable of forwarding an incoming call, such as from terminal 102, to a telephone number of a PBX user's "off-premises" terminal that is accessible through network 101. This type of forwarding to a terminal affiliated with exchange 105 is also known as "extending" a call because the connection to the off-premises terminal appears to exchange 105 as an additional PBX line, or "call appearance." Exchange 105 extends the call to the call appearance at the off-premises terminal in addition to switching the same incoming call to a call appearance at an "on-premises terminal" within the enterprise area that exchange 105 serves. In telecommunications system 100, terminals 106 and 107 are on-premises terminals with respect to private branch exchange 105, while terminals 103 and 112 are off-premises terminals with respect to exchange 105. Note that in system 100, terminals 102 and 113 are not off-premises terminals because, unlike terminals 103 and 112, they are not affiliated with exchange 105.

To accomplish (i) the switching of an incoming, enterprise-related call to an on-premises terminal and (ii) the extending of the call to the correct off-premises terminal, private branch exchange 105 maintains a table that correlates the off-premises telephone number to the on-premises, private branch exchange extension. Table 1 depicts a table that illustrates the correlation.

**Table 1 - PBX Extension-to-PSTN Number Database**

| On-Premises Telecommunications Terminal | Private Branch Exchange Extension | Telecommunications Network Number |
|---|---|---|
| 106 | 732-555-0102, x11 | 201-555-1236 |
| 107 | 732-555-0102, x12 | 908-555-3381 |
| . . . | . . . | . . . |

As an example, a first caller at terminal 102 who wishes to reach the PBX user of terminal 106 dials the PBX number (i.e., 732-555-0102). Private branch exchange 105 receives the incoming call and the extension number (i.e. x11) as specified by the caller. By using stored information that is similar to the information in Table 1, private branch exchange 105 determines that the call is also to be extended to off-premises telephone number 201-555-1236; this is the telephone number that is associated with off-premises terminal 112, which belongs to the PBX user of terminal 106. Exchange 105 then extends the call to terminal 112. The idea behind transmitting the call to both terminals 106 and 112 is that if the PBX user is not reachable at her office phone (i.e., terminal 106), then possibly she is reachable at a phone that is outside of the office (i.e., terminal 112).

Continuing with the example, the PBX user is away from her office - but is on her way to the office - and answers the call by using her cell phone, off-premises terminal 112. Private branch exchange 105 detects that terminal 112 has answered the call and, as a result, excludes the call appearance at terminal 106 (i.e., the PBX user's office phone) from the call. Exchange 105 excludes terminal 106 for the purpose of preventing an interloper from using terminal 106 to eavesdrop on the call. Unfortunately, when the PBX user (still on the call) arrives at her office, she too is prevented from picking up the call from terminal 106, her office phone. The user might have the option of entering a command to gain access to the call on her office phone, but the action required is potentially distracting to the user and to the other parties on the call.

WO 98/36550 discloses a method for picking up a call by a second communication terminal after the call has been placed on hold by a first terminal. US 2002/0019246 discloses a system for selectively establishing communication with at least one wireless device associated with a single telephone number serving as a virtual office extension.

### Summary of the Invention

In accordance with the present invention there is provided a method according to claim 1.

A user who is on a call using a call appearance at a first terminal is enabled to continue the call on a call appearance at a second terminal, wherein the second terminal has been excluded from the call. In the illustrative embodiment of the present invention, a private branch exchange that handles both of the telecommunications terminals receives a first signal that indicates that the first terminal has disconnected from the call. The private branch exchange then receives a second signal that indicates that the second terminal has gone off-hook or otherwise indicates a request to be added to the call. If the private branch exchange receives the second signal within a predetermined time interval after having received the first signal, the exchange adds the second terminal to the call. If the predetermined time interval passes without receiving the second signal, the private branch exchange concludes that the user has indeed hung up from the call. In some embodiments, the private branch exchange also checks whether it had received a second signal within a predetermined time interval *prior to* having received the first signal; if it had, the exchange adds the second terminal to the call.

The predetermined time interval in the illustrative embodiment is administrate-for example, by the user or a technician who administers the private branch exchange. In some alternative embodiments, the predetermined time interval is dependent on one or more elements related to the private branch exchange. For example, the predetermined time interval can be made dependent on the second telecommunications terminal to account for the user's ability in getting the terminal to signal an off-hook condition quickly enough.

In accordance with the illustrative embodiment, the private branch exchange transmits an indication to the second terminal to indicate to the user that the exchange has added the terminal to the call successfully. In some embodiments, the private branch exchange transmits the indication in such a way so that other parties on the call remain unaware of the user's move from one terminal to another. In some alternative embodiments, the private branch exchange does not transmit the indication.

The illustrative embodiment of the present invention comprises: adding a second telecommunications terminal to a call that previously involved a first telecommunications terminal, only when a condition is true; wherein the condition is based on the time difference between (i) receiving a first signal that indicates that the first telecommunications terminal is disconnecting from the call and (ii) receiving a second signal that signifies a request for the second telecommunications terminal to be added to the call.

### Brief Description of the Drawings

Figure 1 depicts a schematic diagram of telecommunications system 100 in the prior art.

Figure 2 depicts a schematic diagram of telecommunications system 200, in accordance with the illustrative embodiment of the present invention.

Figure 3 depicts a block diagram of the salient components of enhanced private branch exchange 205 in accordance with the illustrative embodiment of the present invention.

Figure 4 depicts a flowchart of the operation of enhanced private branch exchange 205 when handling a user on a call who attempts to move from a first call appearance to a second call appearance, in accordance with the illustrative embodiment of the present invention.

### Detailed Description

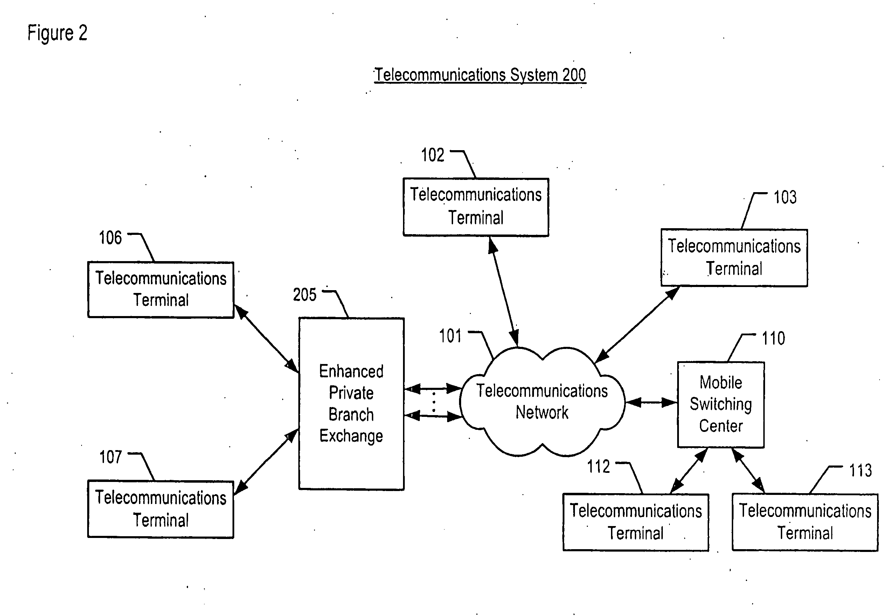

Figure 2 depicts a schematic diagram of a telecommunications system, in accordance with the illustrative embodiment of the present invention. Telecommunications system 200 comprises:
i. telecommunications network 101,
ii. network telecommunications terminals 102 and 103,
iii. enhanced private branch exchange 205,
iv. on-premises telecommunications terminals 106 and 107,
v. mobile switching center 110, and
vi, cellular telecommunications terminals 112 and 113,
all of which are interconnected as shown.

All of the elements depicted in Figure 2- with the exception of enhanced private branch exchange 205-are described above and with respect to Figure 1.

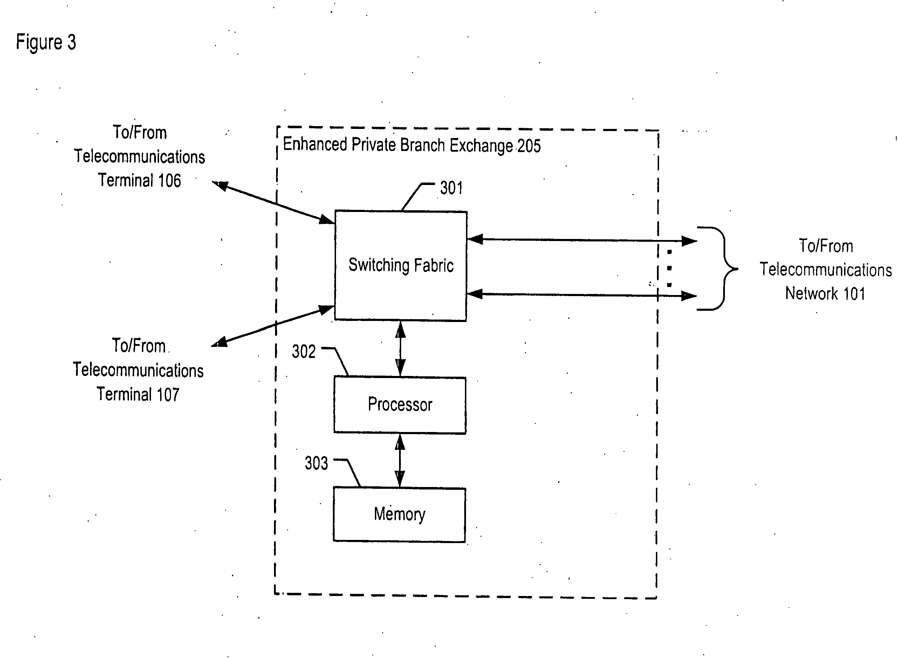

Enhanced private branch exchange 205 is a data-processing system, the salient components of which are described below and with respect to Figure 3. Enhanced private branch exchange 205 is capable of switching incoming calls (*e.g.*, from terminal 102, *etc*.) from network 101 via one or more communications paths to on-premises terminals, such as terminals 106 and 107. Exchange 205 is also capable of handling outgoing calls from on-premises terminals to network 101 via one or more communications paths.

Enhanced private branch exchange 205 is also capable of extending an incoming call (*e.g.*, from terminal 102, *etc.*) to a telephone number of an off-premises terminal. From exchange 205's perspective, an "off-premises" terminal is a terminal that is accessible through network 101 while still being affiliated with exchange 205 as an extension to exchange 205's enterprise network. For pedagogical purposes, telecommunications terminals 103 and 112 are the off-premises terminals in telecommunications system 200. Exchange 205 is capable of extending the incoming call to the intended off-premises terminal in addition to or independently of switching the same incoming call to an on-premises terminal within the enterprise area that exchange 205 serves.

Enhanced private branch exchange 205 is connected to telecommunications systems that are present in network 101 via communications paths that comprise Integrated Services Digital Network (ISDN) trunks, as are known in the art. As those who are skilled in the art will appreciate, other types of communications paths might connect exchange 205 to network 101. For example, exchange 205 might receive at least some of the incoming calls via the Session Initiation Protocol over an Internet Protocol-based network.

It will be clear to those skilled in the art, after reading this disclosure, how to make and use alternative embodiments of the present invention in which enhanced private branch exchange 205 provides telecommunications service to a different number of on-premises terminals and a different number of off-premises terminals than those depicted.

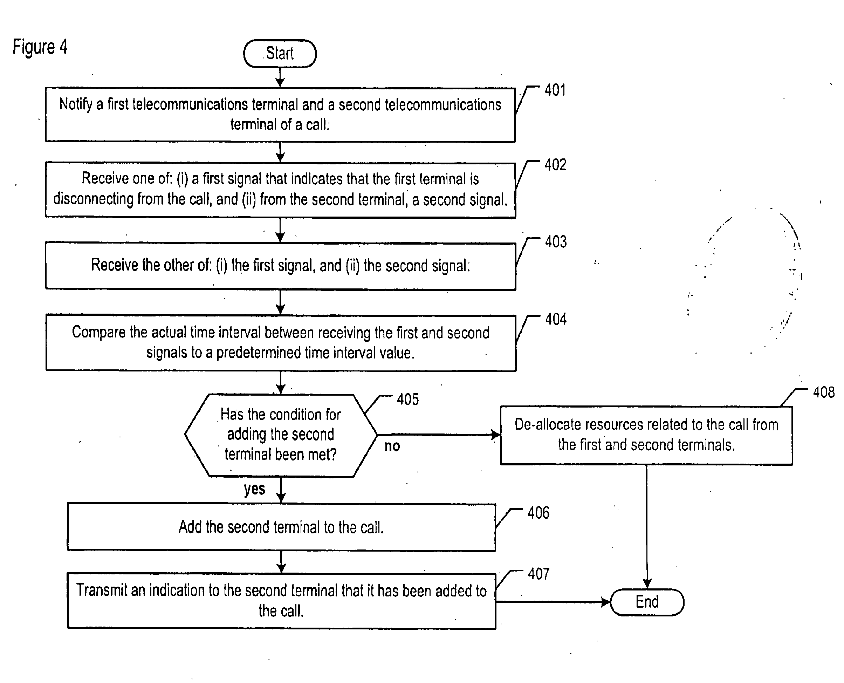

Enhanced private branch exchange 205 is also capable of performing the tasks described below and with respect to Figure 4, in accordance with the illustrative embodiment. It will be clear to those skilled in the art, after reading this disclosure, how to make and use enhanced private branch exchange 205. Moreover, as those who are skilled in the art will appreciate, there can be alternative embodiments of the present invention in which a switch, contact center, or other type of data-processing system than a private branch exchange performs the described tasks. The data-processing systems in those alternative embodiments can inter-operate with the Public Switched Telephone Network that constitutes network 101. In some other alternative embodiments, those data-processing systems-or exchange 205, for that matter-can inter-operate with another type of network entirely (*e.g*., an Internet Protocol-based network, a wireless network, *etc*.). Putting it differently, the present invention is well suited for implementation in variety of networks: in public and private telecommunications networks, in circuit-switched and packet-switched networks, in wireline and wireless networks, and so forth.

Figure 3 depicts a block diagram of the salient components of enhanced private branch exchange 205 in accordance with the illustrative embodiment of the present invention. Enhanced private branch exchange 205 comprises switching fabric 301, processor 302, and memory 303, interconnected as shown.

Switching fabric 301 is capable of switching calls between on-premises terminals (*e.g.*, terminals 106 and 107, *etc*.), and terminals that are accessible through network 101. In addition, switching fabric 301 is capable of performing the tasks described below and with respect to Figure 4, under the direction of processor 302. It will be clear to those skilled in the art how to make and use switching fabric 301.

Processor 302 is a general-purpose processor that is capable of receiving called-related data from switching fabric 301, of reading data from and writing data to memory 303, and of executing the tasks described below and with respect to Figure 4. In some alternative embodiments of the present invention, processor 302 might be a special-purpose processor. In either case, it will be clear to those skilled in the art, after reading this disclosure, how to make and use processor 302.

Memory 303 is a non-volatile random-access memory that stores the instructions and data used by processor 302. Memory 303 stores the PBX on-premises extension and affiliated off-premises telephone number for each PBX user, which are shown in Table 1. It will be clear to those skilled in the art how to make and use memory 303.

Figure 4 depicts a flowchart of the operation of enhanced private branch exchange 205, in accordance with the illustrative embodiment of the present invention. In the operation, exchange 205 is handling a user on a call who attempts to move from a first call appearance on one terminal to a second call appearance on another terminal. For example, the user is currently on the call using her cellular phone; she arrives at her office and wishes to continue the call using her office deskset. In the example provided, cellular terminal 112 represents the first telecommunications terminal associated with the first call appearance, and on-premises terminal 106 represents the second telecommunications terminal associated with the second call appearance. As those who are skilled in the art will appreciate, however, the tasks described with respect to Figure 4 can also apply to other telecommunications terminals. It will be clear to those skilled in the art which tasks depicted in Figure 4 can be performed simultaneously or in a different order than that depicted.

At task 401, enhanced private branch exchange 205 processes.a new call that is related to terminal 112, in well-known fashion. The call is either incoming from network 101 or outgoing (*i.e.,* placed from terminal 112 through exchange 205). If the call is an incoming call, exchange 205 notifies terminals 106 and 112 of the call. If terminal 112 answers the call, exchange 205 receives an answer indication from terminal 112 and then optionally excludes terminal 106 from the call, in well-known fashion.

At some point during the call, at task 402, exchange 205 first receives either (i) a first signal that indicates that terminal 112 is disconnecting from the call or (ii) a second signal that is from terminal 106. The second signal, if received, is the result of the user at terminal 106 attempting to add terminal 106 to the call. For example, exchange 205 might sense an off-hook condition at terminal 106, which is the result of the user having lifted terminal 106's handset from its cradle.

Later, at task 403, exchange 205 then receives the *other* of (i) the first signal and (ii) the second signal. As those who are skilled in the art will appreciate, in one scenario, exchange 205 might receive the *first* signal first (at task 402), followed by the second signal (at task 403). In another scenario, exchange 205 might receive the *second* signal first, followed by the first signal. That is, exchange 205 might receive an off-hook signal (or equivalent) from terminal 106 before it receives a signal that indicates that terminal 112 is disconnecting from the call, depending on the order in which the user of terminals 106 and 112 takes action with the two terminals.

At task 404, exchange 205 determines the time difference between receiving the first signal and the second signal, and compares the absolute value of the time difference to a predetermined value of a time interval. Using the absolute value of the time difference takes into account both (i) the "first signal arriving first" scenario and (ii) the "second signal arriving first" scenario. The predetermined value in the illustrative embodiment is administrable-by the user or a technician, for example-within a range of values, such as between zero and three seconds. In some alternative embodiments, the predetermined value is hard coded (*e.g.*, at two seconds, *etc.*). In some other alternative embodiments, the predetermined value is based on one or more elements in telecommunications system 200. For example, the value might be based on the terminal that is requesting to be added to the call so that the user's ability to get the terminal to signal an off-hook condition is accounted for. If it is more involved to signal an off-hook condition than it is with other types of terminals, then the value might be larger (*e.g.,* three seconds instead of two, *etc.*) than with other terminals. Similarly, if the particular user is physically impaired and takes longer than other PBX users to signal an off-hook condition, then the value might be larger than for other PBX users.

At task 405, based on the result of task 404, exchange 205 determines whether the condition is met for adding the second terminal to the call. In accordance with the illustrative embodiment, the condition is met when the absolute value of the time difference is less than the predetermined value. In some alternative embodiments, the condition is met when the absolute value of the time difference is either less than *or equal* to the predetermined value. In other words, for the condition to be true, exchange 205 had to have received the second signal (*i.e*., the off-hook signal from terminal 106) within the predetermined time interval after having received the first signal (*i.e.*, the indication that terminal 112 is disconnecting). Alternatively stated, for the condition to be true, exchange 205 had to have received a disconnect signal related to terminal 112 within the predetermined time interval before receiving the off-hook signal from terminal 106.

If the events of (i) receiving the first signal and (ii) receiving the second signal have occurred within the predetermined time interval of each other (*i.e*., the condition is true), task execution proceeds to task 406. Otherwise, it is assumed that the PBX user has indeed hung up from the call and is not moving from one call appearance to another; task execution subsequently proceeds to task 408.

In some embodiments, exchange 205 uses two different, predetermined time intervals, depending on the order in which exchange 205 receives the first and second signals. In other words, the predetermined time interval used in the "second signal arriving first" scenario might be the same as or might be different from the predetermined time interval used in the "first signal arriving first" scenario. For example, the user of the two terminals might first pick up terminal 106 (*i.e*., the office phone) and then hang up terminal 112 (*i.e.,* the cell phone), instead of the other way around. For this scenario, exchange 205 might use a longer (or shorter) time interval against which to measure the difference in arrival times between the first and second signals than for the scenario in which the user first hangs up terminal 112 and then picks up terminal 106.

At task 406, exchange 205 adds terminal 106 to the call, in accordance with the illustrative embodiment of the present invention, as the result of having met the condition for adding the terminal. At this point, there might be one other party on the call or multiple other parties on the call, as in a conference call. Note that it is not *the user* of terminal 106 who is being added to the call because, from the perspective of the infrastructure that is maintaining the call, the user has never left the call during the move from one call appearance to another. Instead, the new *terminal* (*i.e.,* terminal 106) is being added to the call.

At task 407, exchange 205 optionally transmits an indication to terminal 106 that it has been added to the call. This can be helpful, for example, when the PBX user switches phones at the same moment when no other party on the call is talking. In some embodiments, exchange 205 transmits the indication so that it is imperceptible by the parties on the call other than the user of terminal 106. Task execution then ends.

At task 408 and having determined that the user (in addition to terminal 112) has indeed dropped from the call, exchange 205 de-allocates call-related resources from terminals 106 and 112. Exchange 205 also sends, to the infrastructure that is maintaining the remaining party or parties on the call, a signal that indicates that the PBX user has disconnected. Task execution then ends.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, *etc*.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A method comprising:
receiving (402), at a private branch exchange, a first signal that indicates that a first telecommunications terminal is disconnecting from a call, the first telecommunications terminal having been engaged in the call via a first call appearance that is associated, by the private branch exchange, with a first user;
**CHARACTERIZED BY**:
excluding (401) a second telecommunications terminal from the call, wherein the call had been answered at the first telecommunications terminal;
receiving (403), from the second telecommunications terminal, a second signal, which signifies that the excluded second telecommunications terminal is to be added to the call; and
adding (406), at the private branch exchange, the excluded second telecommunications terminal to the call via a second call appearance, only when the first and second signals are received within a predetermined time interval of each other, wherein the second call appearance is also associated, by the private branch exchange, with the first user.

2. The method of claim 1 wherein the second signal indicates an off-hook condition at the second telecommunications terminal.

3. The method of claim 1 wherein the first telecommunications terminal is an off-premises telecommunications terminal and the second telecommunications terminal is an on-premises telecommunications terminal with respect to the private branch exchange.

4. The method of claim 1 further comprising notifying (401) the first telecommunications terminal and the second telecommunications terminal of the call, before the excluding of the second telecommunications terminal.

5. The method of claim 1 further comprising transmitting (407) an indication to the second telecommunications terminal that it has been added to the call.

6. The method of claim 1 wherein the predetermined time interval is between zero and three seconds.

7. The method of claim 1 wherein the predetermined time interval is dependent on the second telecommunications terminal.

8. The method of claim 1 further comprising de-allocating (408), from the first and second telecommunications terminals, call resources related to the call, only when the first and second signals are not received within the predetermined time interval of each other.

## Patentansprüche

1. Verfahren, umfassend:
Empfangen (402) eines ersten Signals an einer Nebenstellenanlage, wobei dieses anzeigt, dass ein erstes Telekommunikationsendgerät von einer Rufverbindung getrennt wird, wobei das erste Telekommunikationsendgerät über eine erste Verbindungsleitung, die durch die Nebenstellenanlage einem ersten Nutzer zugeordnet wird, an der Rufverbindung teilgenommen hat,
**gekennzeichnet durch**
Ausschluss (401) eines zweiten Telekommunikationsendgeräts aus der Rufverbindung, indem die Rufverbindung an dem ersten Telekommunikationsendgerät angenommen worden ist,
Empfangen (403) eines zweiten Signals von dem zweiten Telekommunikationsendgerät, welches bedeutet, dass das ausgeschlossene zweite Telekommunikationsendgerät zu der Rufverbindung hinzugefügt werden soll, und
Hinzufügen (406) des ausgeschlossenen zweiten Telekommunikationsendgeräts zu der Rufverbindung an der Nebenstellenanlage über eine zweite Verbindungsleitung, und zwar nur dann, wenn das erste und das zweite Signal innerhalb einer vorgegebenen Zeitspanne nacheinander empfangen werden, wobei die zweite Verbindungsleitung ebenfalls **durch** die Nebenstellenanlage dem ersten Nutzer zugeordnet wird.

2. Verfahren nach Anspruch 1, bei welchem das zweite Signal einen angenommenen zustand an dem zweiten Telekommunikationsendgerät anzeigt.

3. Verfahren nach Anspruch 1, bei welchem das erste Telekommunikationsendgerät ein anlagenexternes Telekommunikationsendgerät und das zweite Telekommunikationsendgerät ein anlageninternes Telekommunikationsendgerät in Bezug auf die Nebenstellenanlage ist.

4. Verfahren nach Anspruch 1, welches ferner ein Melden (401) des Anrufs an dem ersten Telekommunikationsendgerät und an dem zweiten Telekommunikationsendgerät umfasst, bevor das zweite Telekommunikationsendgerät ausgeschlossen wird.

5. Verfahren nach Anspruch 1, welches ferner das Senden (407) einer Anzeige an das zweite Telekommunikationsendgerät darüber umfasst, dass es zu der Rufverbindung hinzugefügt worden ist.

6. Verfahren nach Anspruch 1, bei welchem die vorgegebene Zeitspanne null bis drei Sekunden beträgt.

7. Verfahren nach Anspruch 1, bei welchem die vorgegebene Zeitspanne von dem zweiten Telekommunikationsendgerät abhängt.

8. Verfahren nach Anspruch 1, welches ferner das Freigeben von Verbindungsressourcen, die sich auf die Verbindung beziehen, von dem ersten und dem zweiten Telekommunikationsendgerät nur dann umfasst, wenn das erste und das zweite Signal nicht innerhalb der vorgegebenen Zeitspanne nacheinander empfangen werden.

## Revendications

1. Procédé dans lequel :
on reçoit (402) à un central privé un premier signal qui indique qu'un premier terminal de télécommunication est déconnecté d'un appel, le premier terminal de télécommunication ayant été engagé dans l'appel par une première apparition d'appel, qui est associée, par le central privé, à un premier utilisateur ;
**caractérisé en ce que** :
on exclut (401) un deuxième terminal de télécommunication de l'appel, alors qu'il a été répondu à l'appel au premier terminal de télécommunication ;
on reçoit (403) du deuxième terminal de télécommunication un deuxième signal, qui signifie que le deuxième terminal de télécommunication exclus doit être ajouté à l'appel ; et
on ajoute (406) au central privé le deuxième terminal de télécommunication exclus à l'appel par une deuxième apparition d'appel, seulement lorsque le premier et le deuxième signaux sont reçus dans un intervalle de temps déterminé à l'avance entre eux, la deuxième apparition d'appel étant associée aussi, par le central privé, au premier utilisateur.

2. Procédé suivant la revendication 1, dans lequel le deuxième signal indique un état décroché au deuxième terminal de télécommunication.

3. Procédé suivant la revendication 1, dans lequel le premier terminal de télécommunication est un terminal de télécommunication hors lieu et le deuxième terminal de télécommunication est un terminal de télécommunication sur les lieux par rapport au central privé.

4. Procédé suivant la revendication 1 dans lequel en outre, on notifie (401) l'appel au premier terminal de télécommunication et au deuxième terminal de télécommunication, avant l'exclusion du deuxième terminal de télécommunication.

5. Procédé suivant la revendication 1 dans lequel, en outre, on transmet (407) une indication au deuxième terminal de télécommunication qui a été ajouté à l'appel.

6. Procédé suivant la revendication 1 dans lequel, l'intervalle de temps déterminé à l'avance est compris entre zéro et trois secondes.

7. Procédé suivant la revendication 1 dans lequel l'intervalle de temps déterminé à l'avance dépend du deuxième terminal de télécommunication.

8. Procédé suivant la revendication 1 dans lequel, en outre, on désaffecte (408) à partir des premier et deuxième terminaux de télécommunication, des ressources d'appel en relation avec l'appel, seulement lorsque que le premier et le deuxième signal ne sont pas reçus dans l'intervalle de temps déterminé à l'avance entre eux.
